# EUROPEAN PATENT APPLICATION

(11) **EP 2 211 340 A1**
(43) Date of publication of application: **28.07.2010**
(21) Application number: 08848379.7
(22) Date of filing: 31.10.2008
(51) Int. Cl.: G11B 7/005, G11B 7/125

(54) **OPTICAL REPRODUCING METHOD AND OPTICAL REPRODCUING SYSTEM**

(30) Priority: 09.11.2007 JP 2007292262
(71) Applicant: TDK Corporation, Tokyo 103-8272 (JP)
(72) Inventor: KIKUKAWA, Takashi, Tokyo 103-8272 (JP); KATO, Tatsuya, Tokyo 103-8272 (JP)
(74) Representative: TBK-Patent
(86) International application number: PCT/JP2008/003130
(87) International publication number: WO 2009/060577

(57) **Abstract**

An optical reading method which suppresses variations in the reading quality of a low-reflection optical recording medium. The optical reading method is to read information from an optical recording medium by irradiating the medium with read laser light having a wavelength λ of 400 to 410 nm. In this method, an information recording layer of the optical recording medium is irradiated with the read laser light with an average read power Pᵣₐ in excess of 1.2 mW if the information recording layer has a reflectance of 4% or less.

## Description

### BACKGROUND OF THE INVENTION

### 1. Field of the Invention

The present invention relates to an optical reading method and an optical reading system for irradiating an optical recording medium with read laser light for reading.

### 2. Description of the Related Art

Conventionally, optical recording media such as CD-DAs, CD-ROMs, CD-Rs, CD-RWs, DVD-ROMs, DVD-Rs, DVD+/-RWs, and DVD-RAMs have been widely used to view digital moving image contents and to record digital data. In the meantime, the recording capacity demanded of these types of optical recording media has been increasing year by year. To meet this demand, so-called next-generation optical discs, which are capable of recording large volumes of moving images or data, have come into commercial use. In these next-generation optical discs, the wavelength of laser light used for recording and reading has been shortened to 405 nm in order to increase their storage capacities.

In the Blu-ray Disc (BD) standard, being one of the next-generation DVD standards, for example, the numerical aperture of an objective lens is set at 0.85 in order to record and read up to 25 GB on and from a single recording layer.

Therefore, it is expected that the volumes of moving images and data being generated will continue to increase in the future. Thus, in order to increase the capacity of an optical recording medium, methods for increasing the linear density of an information recording layer in the optical recording medium and increasing the number of information recording layers have been investigated (I. Ichimura et. al., Appl. Opt, 45, 1794-1803 (2006); K. Mishima et. al., Proc. of SPIE, 6282, 62820I (2006)).

At present, typical optical reading methods use a technique called High Frequency Modulation. High Frequency Modulation refers to a method of emitting short pulses of read laser light with a high peak power (Pᵣₚ) for reading at a frequency that is sufficiently higher than the channel bit frequency of the signal. The use of High Frequency Modulation can reduce both mode competition noise which is inherent to the read laser and induced noise which is ascribable to returning light from the optical recording medium. In High Frequency Modulation, the average read power Pᵣₐ is defined as the level where an area that is bounded by the pulsed read laser light (with the average read power Pᵣₐ defined as the bottom) coincides with an area that is bounded by the bottom power P_{rb} and the average read power Pᵣₐ.

The single-speed Blu-ray Disc (BD) standard with a reading linear velocity of 4.92 m/s provides the following specifications: a channel bit frequency of 66 MHz (being a channel bit rate of 66 Mbit/s); a High Frequency Modulation frequency of 400 ± 40 MHz; an irradiation time of the half width of pulsed read laser light Q of 300 ± 30 ps; and a rate Pᵣₚ/Pᵣₐ of 7.0 ± 0.7, where Pᵣₚ is the peak read power and Pᵣₐ is the average read power.

The recording capacity may be increased by making an optical recording medium multilayered, in which case the information recording layers have lower reflectances when compared to an ordinary single-layer medium. The inventors' studies, which were publicly unknown at the time of the filing of the present application, however, show that a decrease in the reflectance of an information recording layer increases the occurrence of errors when reading, and the error rate varies even more as the reflectance decreases. The multilayered information recording layers with lower reflectances have therefore had the problem that the reading quality varies from one information recording layer to another, complicating the compensating read control system. There has also been another problem in that manufacturing errors can change the reflectances of information recording layers, thereby causing a significant impact on their reading quality.

### SUMMARY OF THE INVENTION

The present invention has been achieved in view of the foregoing problems. It is thus an object of the present invention to provide an optical reading method and the like which can maintain favorable reading quality all the time.

The inventors have made intensive studies and achieved the foregoing object by the provision of the following means.

To achieve the aforementioned object, a first aspect of the present invention is an optical reading method for reading information from an optical recording medium by irradiating the medium with read laser light having a wavelength λ of 400 to 410 nm, wherein an information recording layer of the optical recording medium is irradiated with the read laser light with an average read power Pᵣₐ in excess of 1.2 mW if the information recording layer has a reflectance of 4% or less.

To achieve the aforementioned object, a second aspect of the present invention is the optical reading method according to the foregoing aspect, wherein the read laser light is used to read the optical recording medium at a reading linear velocity in excess of 4.1 m/s.

To achieve the aforementioned object, a third aspect of the present invention is the optical reading method according to the foregoing aspects, wherein Pᵣₚ / Pᵣₐ < 4, where Pᵣₚ is a peak read power of the read laser light.

To achieve the aforementioned object, a fourth aspect of the present invention is the optical reading method according to the foregoing aspects, wherein the read laser light for the information recording layer to be irradiated with is constant light.

To achieve the aforementioned object, a fifth aspect of the present invention is the optical reading method according to the foregoing aspects, wherein the read laser light is used to read the optical recording medium at a reading linear velocity in excess of 8.2 m/s.

To achieve the aforementioned object, a sixth aspect of the present invention is the optical reading method according to the foregoing aspects, wherein the optical recording medium has two or more information recording layers.

To achieve the aforementioned object, a seventh aspect of the present invention is the optical reading method according to the foregoing aspects, wherein the optical recording medium has four or more information recording layers.

To achieve the aforementioned object, a eighth aspect of the present invention is the optical reading method according to the foregoing aspects, wherein the information recording layers include at least one having a first reflectance and one having a second reflectance different from the first reflectance.

To achieve the aforementioned object, a ninth aspect of the present invention is an optical reading system including: a rotation drive unit for rotating an optical recording medium including an information recording layer having a reflectance of 4% or less; a laser light source for generating read laser light having a wavelength λ of 400 to 410 nm; an objective lens for collecting the read laser light to irradiate the optical recording medium with the read laser light; a photoelectric transducer for receiving reflected light of the read laser light and converting it into an electronic signal; and a laser control unit for controlling an average read power Pᵣₐ of the read laser light to above 1.2 mW.

According to the present invention, it is possible to provide the excellent effects of suppressing variations in reading quality when reading an optical recording medium having low reflectance, and improving the reading durability of the optical recording medium.

### BRIEF DESCRIPTION OF THE DRAWINGS

Fig. 1 is a block diagram showing the system configuration of an optical reading system according to an embodiment of the present invention;
Figs. 2A and 2B are a perspective view and an enlarged sectional view of an optical recording medium to be read by the optical reading system, respectively;
Fig. 3 is an enlarged perspective view showing the mode of data storage in an information recording layer of the optical recording medium;
Figs. 4A and 4B are time charts of laser light intended for irradiation in the optical reading system;
Fig. 5 is a graph showing the results of evaluation on average read power in examples and a comparative example;
Fig. 6 is a graph showing the results of evaluation on reading durability by irradiation method according to the example; and
Fig. 7 is a graph showing the results of evaluation on reading durability by reading linear velocity according to the example.

### DETAILED DESCRIPTION OF THE PREFERRED EMBODIMENTS

Hereinafter, an embodiment of the present invention will be described in detail with reference to the drawings.

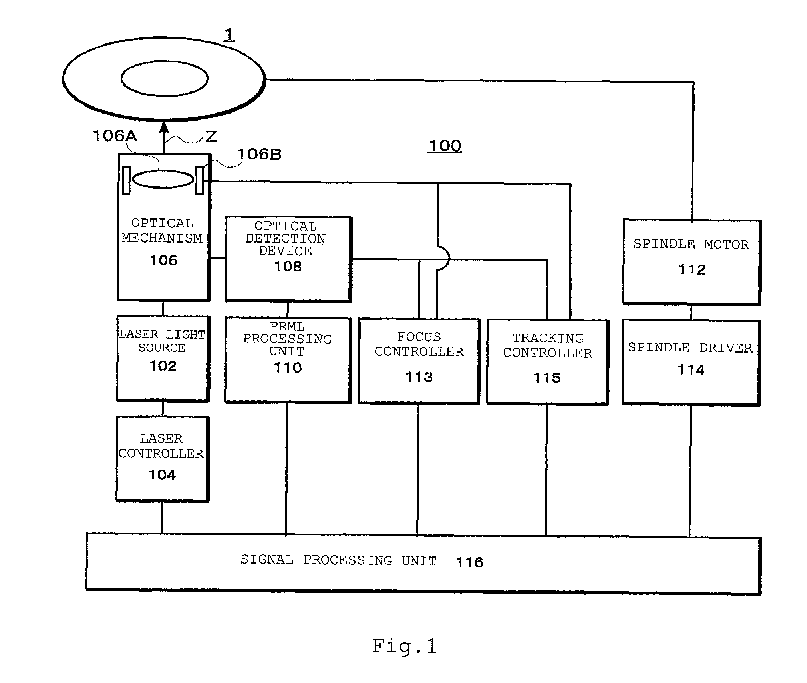

Fig. 1 shows the configuration of an optical reading system 100 which practices the optical reading method according to the embodiment of the present invention. This optical reading system 100 is configured to include a laser light source 102, a laser controller 104, an optical mechanism 106, an optical detection device 108, a PRML (Partial Response Maximum Likelihood) processing unit 110, a spindle motor 112, a focus controller 113, a spindle driver 114, a tracking controller 115, and a signal processing unit 116. The laser light source 102 generates laser light Z to be used for reading. The laser controller 104 controls the laser light source 102. The optical mechanism 106 guides the laser light Z to an optical recording medium 1. The optical detection device 108 detects the reflected light of the laser light Z. The PRML processing unit 110 decodes the information detected by this optical detection device 108 based on a PRML detection method. The spindle motor 112 rotates the optical recording medium 1. The spindle driver 114 performs rotation control on the spindle motor 112. The focus controller 113 detects a focus error (FE) based on an electrical signal transmitted from the optical detection device 108, and performs drive control on a lens drive coil 106B in the focus direction (the direction of the optical axis) by utilizing this focus error. The tracking controller 115 detects a tracking error based on an electrical signal transmitted from the optical detection device 108, and performs drive control on the lens drive coil 106B in the tracking direction by utilizing this tracking error. The signal processing unit 116 transmits the decoded read data to a CPU (Central Processing Unit) which is not shown in particular.

The laser light source 102 is a semiconductor laser which generates the laser light Z of a predetermined power and waveform under the control of the laser controller 104. The optical mechanism 106 includes an objective lens 106A and a polarization beam splitter, and can focus the laser light Z upon an information recording layer as needed. The polarization beam splitter extracts and guides the reflected light from the information recording layer to the optical detection device 108. The optical detection device 108 is a photodetector which receives the reflected light of the laser light Z, converts it into an electrical signal, and outputs the same to the PRML processing unit 110 as a read signal. The PRML processing unit 110 decodes this read signal, and outputs the decoded binary identification signal to the signal processing unit 116.

In this optical reading system 100, the laser light Z has a wavelength λ of 400 to 410 nm. The objective lens 106A of the optical mechanism 106 has a numerical aperture NA of 0.84 to 0.86. More specifically, the wavelength λ of the laser light Z is set to 405 nm, and the numerical aperture NA of the objective lens 106 is set to 0.85. The clock frequency f of this optical reading block is set to 66 MHz. Under the rotation control by means of the spindle driver 114, the number of rotations of the optical recording medium 1 can be freely controlled within the range of 0 to 10000 rpm. As a result, the linear velocity LV of the optical recording medium 1 can be freely controlled to cover the range of 4.1 m/s to 16.4 m/s.

To start reading information from the optical recording medium 1, the laser light source 102 generates the laser light Z of a predetermined read power. An information recording layer of the optical recording medium 1 is irradiated with this laser light Z to start reading. The method of controlling this read power will be described later. The laser light Z is reflected by the information recording layer, is captured through the optical mechanism 106, and is converted into an actual read signal (hereinafter, referred to as a real signal) by the optical detection device 108.

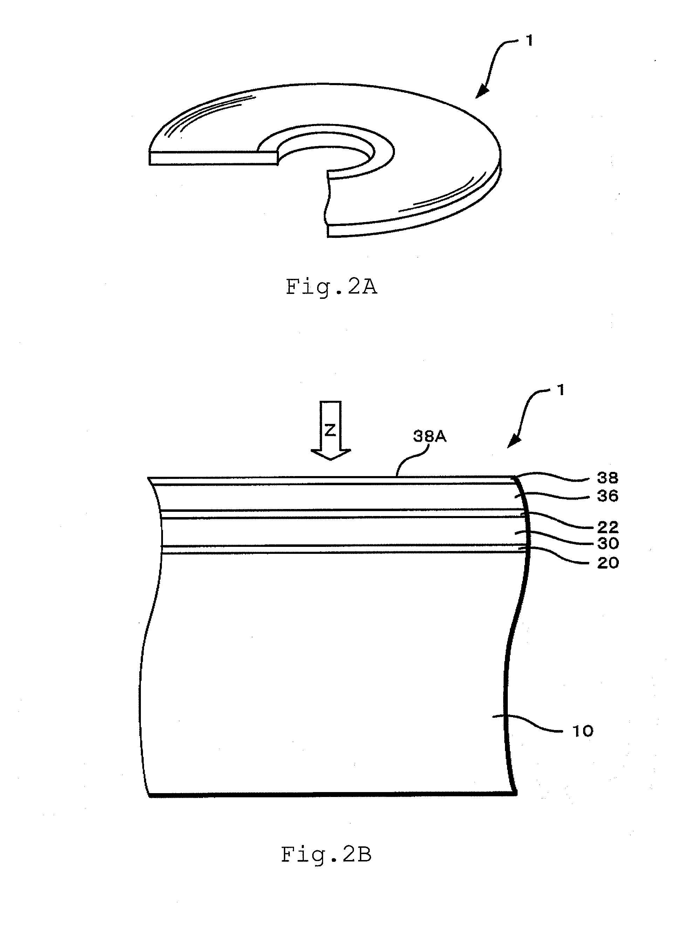

Fig. 2A shows the overall configuration of the optical recording medium 1. This optical recording medium 1 is a disc-like medium, having an outer dimension of approximately 120 mm and a thickness of approximately 1.2 mm. As shown enlarged in Fig. 2B, the optical recording medium 1 is formed by stacking a substrate 10, an L0 information recording layer 20, a spacer layer 30, an L1 information recording layer 22, a cover layer 36, and a hard coat layer 38 in this order, having the information recording layers of dual-layer structure.

The spacer layer 30, the cover layer 36, and the hard coat layer 38 are all light-transmitting, and are configured to transmit laser light that is incident from outside. The laser light Z which is incident on a light incident surface 38A of the hard coat layer 38 can thus be used to record and read information on/from the L0 and L1 information recording layers 20 and 22.

The L1 information recording layer 22 is the information recording layer lying closer to the light incident surface 38A of the optical recording medium 1. The L0 information recording layer 20 is the one farther from the light incident surface 38A. In the present embodiment, the information recording layers 20 and 22 have a recording capacity of 30 GB each. It should be appreciated that the information recording layers may have respective different recording capacities, other than 30 GB freely.

The substrate 10 is a disc-like member having a thickness of approximately 1.1 mm. The substrate 10 may be made of various materials including glass, ceramic, and resin. A polycarbonate resin is used here. Aside from polycarbonate resins, available resins include olefin resins, acrylic resins, epoxy resins, polystyrene resins, polyethylene resins, polypropylene resins, silicone resins, fluororesins, ABS resins, and urethane resins. Of these, polycarbonate resins and olefin resins are preferable in view of workability and moldability. Grooves, lands, pit rows, or the like are formed in/on the substrate 10 at the side of the information recording layers, depending on the intended use.

The spacer layer 30 is stacked between the L0 information recording layer 20 and the L1 information recording layer 22, having the function of separating these recording layers from each other. Grooves (lands), pit rows, or the like are formed in/on the surface of the spacer layer 30 at the side of the light incident surface 38A. The spacer layer 30 may be made of various materials. As mentioned previously, it has to be made of a light-transmitting material so as to transmit the laser light Z. For example, ultraviolet-curing acrylic resins may be used favorably.

In this optical recording medium 1, the spacer layer 30 has a thickness of 25 µm. The hard coat layer 38 has a thickness of 2 µm, and the cover layer 36 has a thickness of 73 µm. As a result, in this optical recording medium 1, both the L0 information recording layer 20 and the L1 information recording layer 22 are stacked within 105 µm from the light incident surface 38A. In particular, the L1 information recording layer 22 is located 80 µm or less from the light incident surface 38A.

The L0 and L1 information recording layers 20 and 22 are the layers responsible for storing data. Available modes of data storage include read only type in which data is previously written and cannot be overwritten, and recordable type in which user writing is allowed. The recordable type is employed here. To be more specific, the data storage mode of recordable type includes a write-once type in which data-written areas cannot be written again, and a rewritable type in which data-written areas can be erased and rewritten with data. The rewritable type is employed here. It should be appreciated that the information recording layers 20 and 22 may be in respective different modes of data storage.

The L0 and L1 information recording layers 20 and 22 of rewritable type are made of phase change material. Using an optical reading system 100 for the recoding, the amount of heating and the cooling rate of the phase change material can be appropriately controlled to create crystalline areas and amorphous areas selectively in the information recording layers 20 and 22. The property that crystalline areas and amorphous areas have different reflectances is utilized to form recording marks on the L0 and L1 information recording layers 20 and 22. This phase change material also has the property that recording marks formed once can be irradiated with the laser light Z again to create a crystalline state and an amorphous state as needed. This makes it possible to from recording marks on the L0 and L1 information recording layers 20 and 22 in a reversible fashion, allowing data erasing and rerecording.

Grooves function as a guide track for the laser light Z when recording data. The laser light Z, traveling along these grooves, is modulated in energy intensity so that recordingmarks are formed on the information recording layers 20 and 22 on the grooves.

To irradiate the L0 information recording layer 20 with a sufficient amount of laser light Z, the L1 information recording layer 22 requires high light transmittance. The L1 information recording layer 22 is thus formed in small thickness so that it has both light transmittance and light reflecting characteristics. Meanwhile, the L0 information recording layer 20 requires a reflectance as high as possible, and is thus formed in large thickness so as to have near zero light transmittance.

In the present embodiment, reflectances R1 and R0 are set to be lower than or equal to 4%, where R1 is the light reflectance of the L1 information recording layer 22 (hereinafter, referred to as an L1 layer reflectance R1), and R0 is the light reflectance of the L0 information recording layer 20 (hereinafter, referred to as an L0 layer reflectance R0) . In particular, the L0 layer reflectance R0 is set to be higher than or equal to 2%.

Specifically, this L1 layer reflectance R1 refers to the ratio between incident light that is incident on the light incident surface 38A and reflected light that is emitted from the same incident surface 38Awhen the L1 information recording layer 22 is irradiated with the laser light Z. Similarly, the L0 layer reflectance R0 refers to the ratiobetween incident light that is incident on the light incident surface 38A and reflected light that is emitted from the same incident surface 38A when the L0 information recording layer 20 is irradiated with the laser light Z.

Reading quality tends to vary if the L1 layer reflectance R1 and the L0 layer reflectance R0 have a large difference therebetween. In the present embodiment, as will be described later, the method of irradiation of the laser light and the reading linear velocity are therefore controlled appropriately to obtain read outputs with smaller variations.

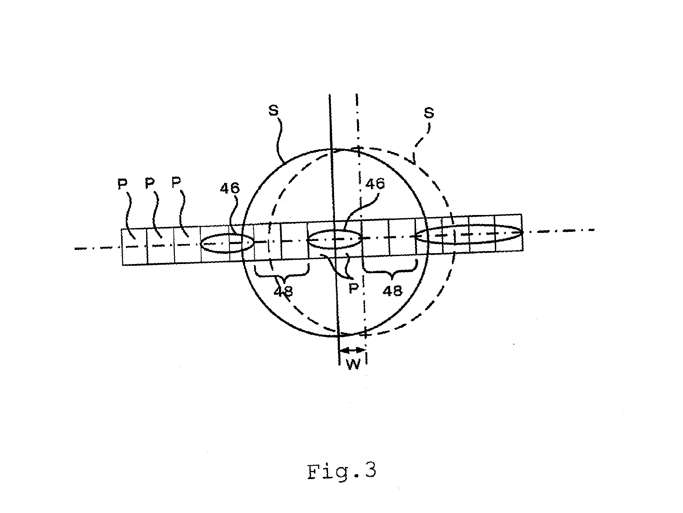

As mentioned previously, the present embodiment deals with the case where the information recording layers 20 and 22 have a recording capacity of 30 GB each. This recording capacity is determined by the combination of the size of the recording area and the linear density. Since the information recording layers 20 and 22 have only a limited recording area, the capacities are usually increased by increasing the linear density. It should be appreciated that the linear density is determined by the volume of data that can be recorded/retained while the laser light Z moves unit length over the information recording layer 20 or 22. In other words, the linear density is determined how far the laser light Z moves per unit clock (time) which determines the recording and read timing. For example, as shown in Fig. 3, the distance W for the laser light Z to move over an information recording layer for a clock period of T (hereinafter, expressed as the length W of a channel bit P) is given by LV/f, where LV is the relative linear velocity between the optical recording medium 1 and the laser light when recording, and f is the channel bit frequency when recording. The smaller this distance W, the greater recording capacity it indicates. In the present embodiment, the length W of a channel bit P is set to 62 nm.

In the present embodiment, the encoding signal is set at (1,7) RLL, with 2T mark as a minimum recording mark 46 and 2T space as a minimum space 48. Consequently, the minimum recording mark 46 and the minimum space 48 have a length 2W = 2LV/f, i.e., 124 nm. Since 2T marks and 2T spaces are extremely small like these, binary detection becomes impossible on the jitter level due to small signal amplitudes when these minimum marks and spaces occur in succession. Moreover, since the minimum marks and spaces are extremely small in area, read errors can occur even when the information recording layers 20 and 22 deteriorate only in part of the recordingmark areas. For this reason, the present embodiment uses the PRML detection method for reading and evaluation.

A description will now be given of an irradiation control on the laser light Z.

The laser controller 104 is capable of switching between the irradiation of the laser light Z by the High Frequency Modulation method and the irradiation of the laser light Z by a constant light (DC light) method when necessary. In either of the High Frequency Modulation method and the constant light (DC light) method, this laser controller 104 controls the laser light Z so that its average read power Pᵣₐ exceeds 1. 2 mW. Specifically, the laser light Z is controlled so that Pᵣₐ = 1. 3 mW.

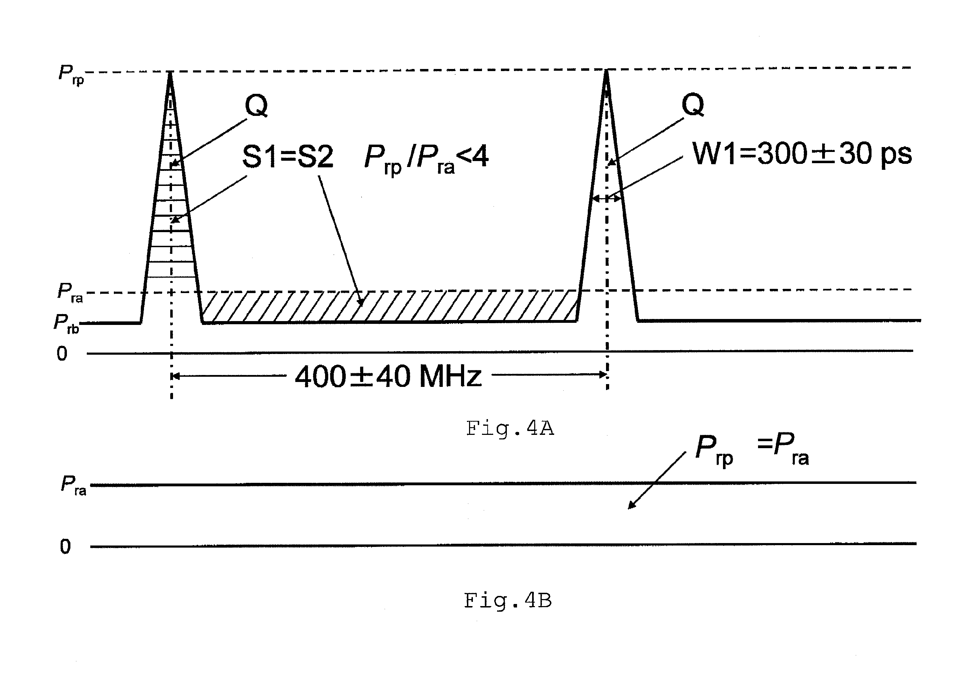

For example, as shown in Fig. 4A, the High Frequency Modulation method provides short pulses of read laser light Q with a high peak power (Pᵣₚ) for high frequency irradiation. Here, the average read power Pᵣₐ is defined at the level where an area S1 that is bounded by the pulsed read laser light Q with this average read power Pᵣₐ as the bottom coincides with an area S2 that is bounded by a bottom power P_{rb} and the average read power Pᵣₐ.

In the present embodiment, this average read power Pᵣₐ is set to be higher than 1.2 mW. This makes it possible to suppress variations in the reading quality of the information recording layers 20 and 22, thereby reducing read errors. This variation-reducing effect will be described later in conjunction with practical examples.

When the average read power Pᵣₐ is maintained above 1.2 mW as in the present embodiment, the laser controller 104 exercises control so that the peak power Pᵣₚ of the laser light Z falls within four times the average read power Pᵣₐ. That is, the laser light Z is applied so that Pᵣₚ / Pᵣₐ < 4. This can prevent the information recording layers 20 and 22 from being irradiated with laser light Z of excessive power, thereby avoiding situations such that the laser light Z for reading erases information from the information recording layers 20 and 22 or writes information accidentally.

Now, in the constant light method, DC light of constant output is applied as shown in Fig. 4B, for example. Here, the constant laser power is controlled to be higher than 1.2 mW. Specifically, the laser light Z is controlled so that Pᵣₚ = Pᵣₐ = 1.3 mW. The use of the constant light method can reduce the peak power Pᵣₚ while maintaining the average read power Pᵣₐ above 1.2 mW for improved reading quality. This makes it possible to prevent the information recording layers 20 and 22 from such risks as unintended erasing of recorded marks and unintended writing to blank areas.

The spindle driver 114 controls the spindle motor 112 preferably so that the linear velocity LV is higher than 4.1 m/s, and more preferably higher than 8.2 m/s. Such high settings of the relative linear velocity between the laser light Z and the optical recording medium 1 can reduce the amount of heat to be accumulated in the information recording layers 20 and 22. As a result, it is possible to avoid the risks of unintended erasing and writing of information from/to the information recording layers 20 and 22 by the read laser light Z, thereby suppressing a deterioration in signal quality when repeating reading. The inventors' studies have shown that linear velocities LV in excess of 8.2 m/s in particular can reduce quality deterioration significantly.

The increased read speed naturally shifts the band of read signals to higher frequencies. Being a photodetector, the optical detection device 108 has the problem, however, that it is less sensitive to signals of higher frequencies. Then, in the present embodiment, the average read power Pᵣₐ is set to be higher than 1. 2 mW so that the increased intensity of reflected light can compensate for the decrease in sensitivity. In other words, the increase of the average read power Pᵣₐ provides reasonable actions both to suppress variations in the reading quality of the information recording layers 20 and 22 and to improve the reading sensitivity of the optical detection device 108.

As has been described, the optical reading system 100 of the present embodiment reads the optical recording medium 1 having the information recoding layers 20 and 22 of no higher than 4% in reflectance by irradiating the information recording layers with the laser light Z that has an average read power Pᵣₐ in excess of 1. 2 mW. This can improve the quality of the read signal and reduce quality variations between the information recording layers 20 and 22. In the optical reading system 100, the reading linear velocity of the laser light is set to be higher than 4.1 m/s (specifically, 8.2 m/s). This can reduce the amount of heat to be accumulated in the information recording layers 20 and 22, despite the increase in the average read power Pᵣₐ. As a result, it is possible to avoid the risks of unintended erasing and writing, thereby improving the reading quality and reading durability. Setting the reading linear velocity of the laser light Z above 8.2 m/s in particular can avoid the risks of accidental erasing and accidental writing of recording marks with even higher reliability.

When using the High Frequency Modulation method for reading, the optical reading system 100 sets the peak power Pᵣₚ to fall within four times the average read power Pᵣₐ. This can avoid such situations that the information recording layers 20 and 22 are heated locally, thereby allowing a further improvement in the reading durability. While wavelengths λ of 400 to 410 nm are particularly prone to poor reading durability, the present embodiment can be applied to improve the reading durability.

In the present embodiment, the peak power Pᵣₚ may be the same as the average read power Pᵣₐ, i.e., the laser light Z maybe applied as constant light. This can suppress variations in the irradiation power, avoiding the risks of unintended erasing and writing of recording marks due to local heating. Consequently, the optical recording medium 1 can be read repeatedly with less deterioration in the read signal quality.

Controlling the laser light Z as in the present embodiment makes it possible to set the information recording layers 20 and 22 to or below 4% in reflectance while maintaining the reading quality and the reading durability at high levels. This allows the multilayered structure of the information recording layers 20 and 22 as in the present embodiment. Four or more information recording layers are preferably stacked for the sake of increased recording capacity.

### [Examples and Comparative Example]

The following shows the results of reading of optical recording media 1 by using the optical reading system 100. For a comparative example, the results of reading of an optical recording medium by using another optical reading method will also be shown. It should be appreciated that the present invention is not limited to these examples.

### [Fabrication of Sample Media for Examples 1 to 3 and Comparative Example 1]

A description will first be given of the sample media that were used in examples 1 to 3 and comparative example 1. Initially, a substrate 10 was manufactured by injection molding. A spiral groove was formed in the surface of this substrate 10 at a track pitch of 0.32 µm. The substrate 10 was made of polycarbonate resin, with a thickness of 1.1 mm and a diameter of 120 mm.

Next, this substrate 10 was loaded in a sputtering system, and the L0 information recording layer was formed over the surface where the groove was formed. Specifically, an Ag reflection film was initially formed with a thickness of 100 nm. Then, a second dielectric layer of ZnS-SiO₂ (80 : 20) was formed with a thickness of 15 nm. A recording film of Sb-Te-Ge (75 : 20 : 5) was formed with a thickness of 10 nm. A first dielectric layer of ZnS-SiO₂ (80 : 20) was formed with a thickness of 15 nm. Finally, a heat sink layer of A1N was formed with a thickness of 30 nm.

Next, the substrate 10 having the L0 information recording layer was loaded in a spin coater. The article was rotated, and an acrylic UV curable resin was dripped for spin coating. Subsequently, a light-transmitting stamper having a spiral groove pattern was put against the surface of the spin-coated resin. Through this light-transmitting stamper, the resin was irradiated with ultraviolet rays for curing. After the curing, the light-transmitting stamper was released to obtain a 25-µm-thick spacer layer having a spiral groove.

The resultant was loaded in the sputtering system again, and the L1 information recording layer was formed over the surface of this spacer layer. Specifically, a third dielectric layer of ZrO₂-Cr₂O₃ (50 : 50) was initially formed with a thickness of 5 nm. An Ag-Cu reflection film was formed with a thickness of 12 nm. A second dielectric layer of ZrO₂-Cr₂O₃ (50 : 50) was formed with a thickness of 4 nm. Then, a recording film of Sb-Te-Ge-In (71: 10: 9: 10) was formed with a thickness of 9 nm in the example 1, with a thickness of 8 nm in the example 2, with a thickness of 7 nm in the example 3, and with a thickness of 6 nm in the comparative example 1. On the recording film, a first dielectric layer of ZnS-SiO₂ (80 : 20) was formed with a thickness of 13 nm. Finally, a heat sink layer of A1N was formed with a thickness of 45 nm.

The substrate 10 having the L1 information recording layer formed thus was loaded in the spin coater. The article was rotated, and an acrylic UV curable resin was dripped for spin coating. The spin-coated resin was then irradiated with ultraviolet rays for curing, thereby forming a cover layer of 73 µm in thickness.

Next, a hard coating agent of ultraviolet/electron beam curable type was applied onto the cover layer by spin coating. The resultant was then heated in the air for 3 minutes to remove the dilute solvent from inside the coating, thereby forming an uncured hard coat material layer. A surface material solution was applied to this uncured hard coat material layer by spin coating. This surface material solution was prepared by adding perfluoropolyether diacrylate and 3-perfluorooctyl-2-hydroxypropyl acrylate to a fluorine-based solvent. Then, the hard coat material layer was dried at 60°C for 3 minutes. By the irradiation of electron beams in a nitrogen gas stream, the hard coat material layer and the surface material solution were cured at the same time. The electron beam irradiation was performed by using an electron beam irradiator Curetron (from NHV Corporation).

In the foregoing processes, the recording film of the L1 information recording layer was formed in four different thicknesses to provide the sample optical recording media 1 for the examples 1 to 3 and the comparative example 1. In the optical recording medium of the example 1, the L0 information recording layer showed a reflectance R0 of 2.0%. In the optical recording medium of the example 2, the L0 information recording layer showed a reflectance R0 of 3.1%. In the optical recording medium of the example 3, the L0 information recording layer showed a reflectance R0 of 4.0%. In the optical recording medium of the comparative example 1, the L0 information recording layer showed a reflectance R0 of 5.2%.

### [Evaluation of Average Read Power]

To examine the adequacy of the average read power, information was recorded on the L0 information recording layers of the optical recording media 1 of the examples 1 to 3 and the comparative example 1 at double speed by using an optical reading system 100 for the recoding. When recording, the optical reading system 100 was conditioned as follows: (1,7) RLL encoding signals; the laser light Z with a wavelength λ of 405 nm; the objective lens 106A with a numerical aperture NA of 0.85; the optical recording and reading block had a clock frequency f of 132 MHz; and the optical recording medium 1 was rotated at a linear velocity LV of 8.2 m/s under the control of the spindle driver 114.

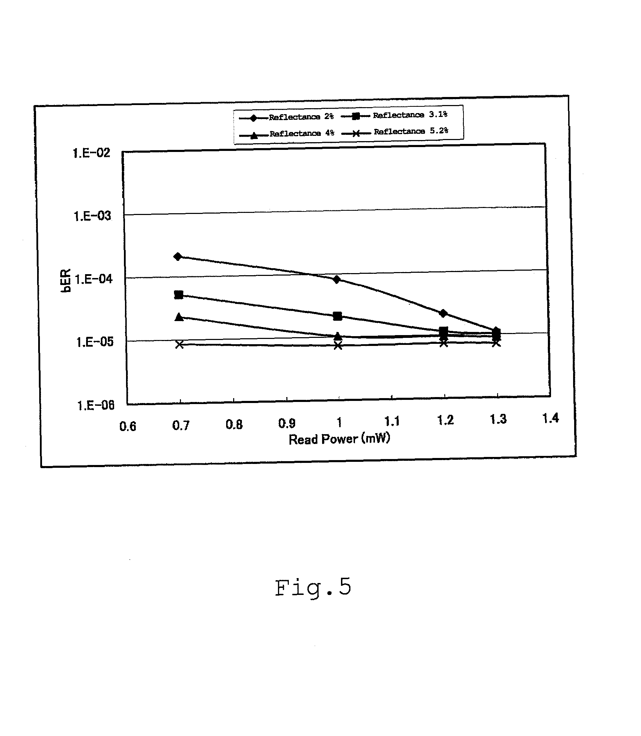

After the recording was completed, the information recorded on the L0 information recording layers of the optical recording media of the examples 1 to 3 and the comparative example 1 was read by using the optical reading system 100, by the single-speed High Frequency Modulation method with various average read powers Pᵣₐ, followed by evaluations on the signal quality. In the examples and the comparative example, four different values of average readpower Pᵣₐ, namely, 0.7 mW, 1.0 mW, 1.2 mW, and 1.3 mW were used for reading. For single-speed reading, the optical reading block was set at a clock frequency f of 66 MHz. Under the control of the spindle driver 114, the optical recording media 1 were rotated at a linear velocity LV of 4.10m/s. When reading, the PRML processing unit 110 of the optical reading system 100 was set at a constraint length of 4. Fig. 5 shows the evaluations on the read signal quality. Note that bER (bit Error Rate) was used as the evaluation index of the reading quality of the optical readingsystem100. For the evaluation instrument, a PRML evaluation unit (ODU1000) from Pulstec Industrial Co., Ltd. was used here.

As is clear from Fig. 5, the read signal quality varies greatly depending on differences in the reflectance of the L0 information recording layer. It is shown that average read powers Pᵣₐ in excess of 1.2 mW suppress variations in signal quality significantly. It can also be seen that the average read power Pᵣₐ of 1.3 mW eliminates most variations in signal quality. Consequently, even when a plurality of information recording layers are stacked with a reflectance of no higher than 4% each as in the present embodiment, stable read signals can always be obtained if the average read power is set to be higher than 1.2 mW, desirably at 1.3 mW or more. Suppose that the multilayered optical recording medium includes both an information recording layer having a first reflectance (such as 4%) and an information recording layer having a second reflectance (such as 2%) different from the first reflectance. Even in this case, it is possible to obtain stable read signals from the respective information recording layers if the average read power is set to be higher than 1.2 mW, desirably at 1.3 mW or more. This can increase the flexibility in designing the reflectances of the respective information recording layers.

### [Evaluation of Reading Durability by Irradiation Method]

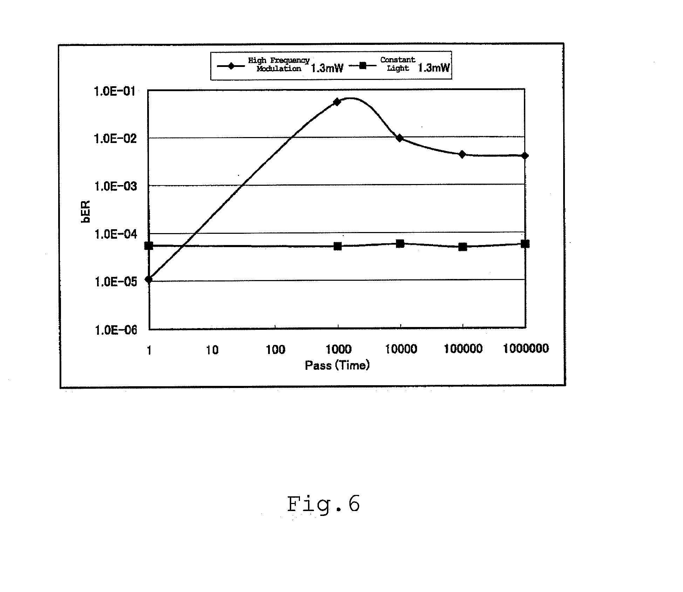

Next, the sample medium of the example 1 (with the L0 information recording layer of 2% in reflectance) was used to evaluate the reading durability under the laser light control of High Frequency Modulation method and constant light method. Specifically, an identical area of the L0 information recording layer was read 1,000,000 times repeatedly by the High Frequency Modulation method, with an average read power Pᵣₐ of 1.3 mW, peak power Pᵣₚ/average Pᵣₐ of 4, and a reading linear velocity LV of 8.2 m/s. The read signal was evaluated for quality. For the constant light method, an identical area of the L0 information recording layer was read 1,000,000 times repeatedly with an average read power Pᵣₐ of 1. 3 mW and a reading linear velocity LV of 8.2 m/s. The read signal was evaluated for quality. Fig. 6 shows the results. Note that the signal quality was evaluated at the 1st, 1000th, 10000th, 100000th, and 1000000th reads, by measuring bER in the foregoing evaluation instrument.

As is clear from Fig. 6, the High Frequency Modulation method provided favorable signal quality in the initial phase, whereas the signal quality fell beyond 100 passes of read. The reason for this is that the pulsed laser light with the high peak power Pᵣₚ deteriorates the phase change material in the L0 information recording layer. Meanwhile, the constant light method caused little deterioration in signal quality even if the average read power Pᵣₐ was maintained high. This shows that DC light having power in excess of 1.2 mW is preferably used to read information recording layers that have low reflectances.

### [Evaluation of Reading Durability by Reading Linear Velocity]

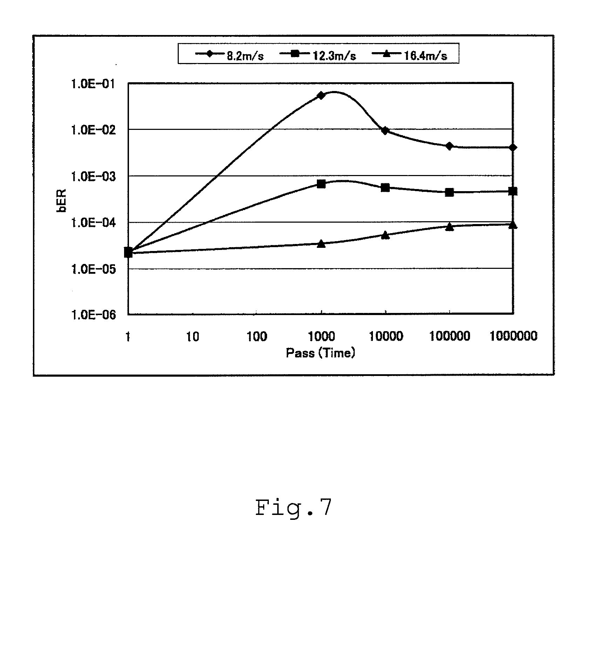

Next, the sample medium of the example 1 (with the L0 information recording layer of 2% in reflectance) was used to evaluate the reading durability based on different reading linear velocities. For reading condition, the High Frequency Modulation method was used with an average read power Pᵣₐ of 1.3 mW and peak power Pᵣₚ/average Pᵣₐ of 4. An identical area of the L0 information recording layer was read 1,000,000 times repeatedly, and was evaluated for changes in quality. Specifically, reading was repeated under linear velocities of 8.2 m/s (2X), 12.3 m/s (3X), and 16.4 m/s (4X). Fig. 7 shows the results. The signal quality was evaluated at the 1st, 1000th, 10000th, 100000th, and 1000000th reads, by measuring bER in the foregoing evaluation instrument.

As is evident from Fig. 7, the linear velocity LV of 8.2 m/s (2X) provided favorable signal quality in the initial phase, whereas the signal quality fell beyond 100 passes of read. The reason for this is that the small linear velocity makes the pulsed laser light with the high peak power Pᵣₚ accumulate locally in part of the L0 information recording layer, thereby deteriorating the phase change material. It can also be seen that the linear velocity LV of 12.3 m/s (3X), or preferably 16.4 m/s (4X), suppressed deterioration in signal quality and improved the reading durability even after repetitive reading. This shows that even with the High Frequency Modulation method, the reading durability can be improved by increasing the reading linear velocity.

As above, the present embodiment has dealt only with the case where the optical recording medium has information recording layers of dual-layered structure. The present invention is not limited thereto, however, and may be applied to optical recording media having one layer, or more than two layers. The embodiment has also only dealt with the case where the information recording layers are of rewritable type, being made of a phase change material. The present invention is not limited thereto, however, and write-once and other information storage modes are also applicable.

The distances from the light incident surface to the respective information recording layers are not limited to the present embodiment, either. For example, while the present embodiment has dealt only with the case where both the information recording layers are stacked within 100 µm from the light incident surface, the present invention is not limited thereto. Some information recording layers may be stacked beyond 100 µm when a plurality of layers are stacked. The optical reading system of the present embodiment has also only dealt with the case where the High Frequency Modulation method and the constant light method can be selected when necessary. The present invention is not limited thereto, however, and either one of the methods may be used exclusively for reading. The present embodiment has also only dealt with the case where the information recording layers have a recording capacity of 30 GB each. The present invention is not limited thereto, however, and the recording capacities may be smaller than or greater than 30 GB.

It should be appreciated that the optical reading method and the optical reading system of the present invention are not limited to the foregoing embodiment, and various modifications may be made without departing from the gist of the present invention.

The present invention is widely applicable to reading of various types of optical recording media.

## Claims

1. An optical reading method for reading information from an optical recording medium by irradiating the optical recording medium with read laser light having a wavelength λ of 400 to 410 nm, wherein an information recording layer of the optical recording medium is irradiated with the read laser light with an average read power Pᵣₐ in excess of 1.2 mW if the information recording layer has a reflectance of 4% or less.

2. The optical reading method according to claim 1, wherein the read laser light is used to read the optical recording medium at a reading linear velocity in excess of 4.1 m/s.

3. The optical reading method according to claim 1 or 2, wherein Pᵣₚ / Pᵣₐ < 4, where Pᵣₚ is a peak read power of the read laser light.

4. The optical reading method according to claim 3, wherein the read laser light for the information recording layer to be irradiated with is constant light.

5. The optical reading method according to any one of claims 1 to 4, wherein the read laser light is used to read the optical recording medium at a reading linear velocity in excess of 8.2 m/s.

6. The optical reading method according to any one of claims 1 to 5, wherein the optical recording medium has two or more information recording layers.

7. The optical reading method according to claim 6, wherein the optical recording medium has four or more information recording layers.

8. The optical reading method according to claim 6 or 7, wherein the information recording layers include at least one having a first reflectance and one having a second reflectance different from the first reflectance.

9. An optical reading system comprising:
a rotation drive unit for rotating an optical recording medium including an information recording layer having a reflectance of 4% or less;
a laser light source for generating read laser light having a wavelength λ of 400 to 410 nm;
an objective lens for collecting the read laser light to irradiate the optical recording medium with the read laser light;
a photoelectric transducer for receiving reflected light of the read laser light and converting it into an electronic signal; and
a laser control unit for controlling an average read power Pᵣₐ of the read laser light to above 1.2 mW.
